(19) **Europäisches Patentamt**

**European Patent Office**

**Office européen des brevets**

(11) **EP 1 354 914 A1**

(12) **EUROPÄISCHE PATENTANMELDUNG**

(43) Veröffentlichungstag:
**22.10.2003 Patentblatt 2003/43**

(21) Anmeldenummer: **03450085.0**

(22) Anmeldetag: **14.04.2003**

(51) Int Cl.[7]: **C08K 5/00**, C08K 11/00,
C08L 101/00, C08L 1/02,
C08L 1/08, C08L 7/02,
C08L 89/00, D01F 8/02,
D01F 1/02, D01F 1/10

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **12.04.2002 DE 10216273**

(71) Anmelder: **Zikeli, Stefan**
**4844 Regau (AT)**

(72) Erfinder:
• **Zikeli, Stefan**
**4844 Regau (AT)**
• **Endl, Thomas**
**4840 Vöcklabruck (AT)**

(74) Vertreter: **Hübscher, Helmut, Dipl.-Ing. et al**
**Spittelwiese 7**
**4020 Linz (AT)**

(54) **Polymerzusammensetzung mit einem biologisch abbaubaren Polymer und Material, Extrakte(n) und/oder Inhaltstoffe(n) aus Kräutern der Familia Asteraceae**

(57) Die Erfindung betrifft eine Polymerzusammensetzung, die (A) ein biologisch abbaubares Polymer und (B) ein Material aus Kräutern der Familia Asteraceae und/oder ein Extrakt aus dem Material aus Kräutern der Familia Asteraceae umfaßt und/oder (C) ein oder mehrere Inhaltsstorfe von Material aus Kräutern der Familia Asteraceae umfaßt. Des weiteren betrifft die Erfindung einen aus der Polymerzusammensetzung hergestellten Formkörper und ein Verfahren zu dessen Herstellung.

Fig. 1

EP 1 354 914 A1

**Beschreibung**

Die Erfindung betrifft eine Polymerzusammensetzung, die ein biologisch abbaubares Polymer und ein Material aus Kräutern der Familia Asteraceae und/oder einen Extrakt aus dem Material aus Kräutern der Familia Asteraceae umfaßt und/oder einen oder mehrere Inhaltsstoffe von Material aus Kräutern der Familia Asteraceae umfaßt. Des weiteren betrifft die Erfindung einen aus der Polymerzusammensetzung hergestellten Formkörper und ein Verfahren zu dessen Herstellung.

Die Kamille wird im System der Pflanzen der Familia Asteraceae (Korbblütler) und der Subfamilia Asteroideae zugeordnet. Davon unterscheidet man die Matricaria - sowie die Anthemis Arten (Dr. H. Schilcher, "Die Kamille - Handbuch für Ärzte, Apotheker und andere Naturwissenschaftler" Wissenschaftliche Verlagsgesellschaft mbH Stuttgart 1987). Zu den Matricaria gehören die Echte Kamille, die Matricaria chamomillaL. (Synonyme sind die Chamomilla recutita od. Matricaria recutita. Man unterscheidet hier verschieden chemische Rassen u.a. bisabololhaltige, bisbabololfreie, proazulenhaltige etc. Diese Rassen (Deine) werden unter folgenden Marken und Namen gehandelt: Holsteiner Marschkamille, Ostfriesische Kamille, Fränkische Kamille, Niederbayrische Kamille, Quendlinburger großblütige Kamille, Erfurter kleinblutige Kamille, Böhmische Kamille. Neben diesen natürlichen Variationen gibt es auch spezielle Züchtungen (Degumille® und Manzana), die einen besonders hohen Bisabololgehalt aufweisen.

Zu den Matricariae gehören weiters u.a. die Strahlenlose Kamille (Matricaria matricarioides Porter bzw. Matricaria discoidea DC.), die Strand Kamille (Matricaria maritima L. [sensu stricto] bzw. Tripleurospermum maritimum L.) die Duftlose od. geruchlose Kamille (Matricaria inodoraL. bzw. Tripleurospermum iodorum Schultz Bip.) sowie die Arten Matricaria caucasica P., Matricaria globifera, Matricaria oreades Boiss. Zu den Anthemis Arten gehören z.B. die Acker Hundskamille (Anthemis arvensis L.), die Stinkende Hundskamille (Anthemis Cotula L.), die Österreichische Hundskamille (Anthemis austriaca Jaqu.), die Römische Kamille (Anthemis nobils bzw. Chamaemelum nobile) und die Färber-Kamille (Anthemis tinctoria L.). Vorstehend bedeutet "L." Linne und "P." Porter. (H.A. Hoppe, "Drogenkunde Band 1 Angiospermen", B. Auflage, Walter de Gruyter Berlin New York, 1975).

Die organischen Kamilleninhaltsstoffe werden grob in zwei Gruppen unterteilt:

1. lipophile Inhaltsstoffe (Einzelkomponenten des ätherischen Öles, Matricin, Chamazulen, Bisabolole, Bisaboloide, weitere Terpene, Gumarine, Spiroether, Flavonag lyka, Phytosterole, fett- und wachsartige Substanzen) und

2. hydrohile Inhaltsstoffe (Flavonoide, Schleimstoffe, wie Polysaccharide, Phenylcarbonsäuren, Aminosäuren und Cholin).

Zu den hydrophilen Inhaltsstoffen gehören die Schleimstoffe.

Der Kamillenschleimstoff besteht hauptsächlich aus Polysacchariden, die laut Literatur (Dr. H. Schilcher, "Die Kamille - Handbuch für Ärzte, Apotheker und andere Naturwissenschaftler", Wissenschaftliche Verlagsgesellschaft mbH Stuttgart 1987) hauptsächlich aus a 1-4 verknüpfter D-Galakturonsäure bestehen. Weitere Bestandteile der Polysaccaride sind u.a. Glucane, Fructane, Galaktane, Mannane, Pentosane, und Polyuroniden, wie Xylose, Arabinose, Galaktose, Glukose und Rhamnose.

Für medizinische Anwendungen werden das Blütenkörbchen bzw. das ätherisch Öl der Blüten verwendet.

Entzündungshemmende (antiphlogistisch) und krampflösende (spasmolytisch) Wirkungen sowie entblähende, wundheilungsfördernde, keimhemmende und leicht desodorierende Eigenschaften werden der Kamille zugeschrieben.

Die Blüten enthalten ca. 0,5 - 1,5 % ätherische Öle, ca. 2,3 % Flavonoide sowie ca. 02 - 0,5 % Cholin. Im ätherischen 01 bildet das Bisabolol mit ca. 25 - 50 % den Hauptbestandteil, weitere Bestandteile des Öls sind z.B. Bisaboloide und Chamazulen (ca. 7 %).

Besondere Bedeutung hat das Bisabolol bzw. die Bisabolaide wegen der entzündungshemmenden (antiphlogistischen) Wirkung.

Wegen dieser Wirkungen ist Kamille herkömmlicherweise Bestandteil vieler Teemischung. Sie kann jedoch auch zu Extrakten und Cremen verarbeitet und das 01 für therapeutische Zwecke verwendet werden.

Außerdem sind Polymerzusammensetzungen mit verschiedenen Additiven zur Herstellung von Formkörpern bekannt.

Aus "Lenzinger Berichte", 76/97, Seite 126 ist beispielsweise eine Lyocellfaser bekannt, die aus einer Celluloselösung in N-Methylmorpholin-N-Oxid (im nachstehenden "NMMNO") gesponnen wurde, der 0,5 bis 5 Gew.%, bezogen auf das Gewicht der Cellulose, an Vernetzern zur Verbesserung des Naßscheuerwerts einverleibt werden können. Außerdem ist beschrieben, Lyocellfasern Carboxymethylchitin, Carboxymethylchitosan oder Polyethylenimin zur Verbesserung der fungiziden Eigenschaften, Polyethylenimin zur Metallionenadsorption und Farbstoffaufnahme, Hyaluronsäure zur Verbesserung der Bacterizideneigenschaften, Xanthan, Guaran, Carubin, Bassorin oder Stärke zur Verbesserung der Hydrophilie, der Wasseraufnahme und der Wasserdampfdurchlässigkeit oder Stärke zur beschleunigten enzymatischen Hydrolyse einzuverleiben.

Daher ist es die der Erfindung zugrundeliegende Aufgabe, eine weitere Polymerzusammensetzung sowie einen daraus gebildeten Formkörper zur Verfügung zu stellen, der wünschenswerte Eigenschaften hat.

Die Lösung dieser Aufgabe ist eine Polymerzusammensetzung, die

    (A) ein biologisch abbaubares Polymer und

    (B) ein Material aus Kräutern der Familia Asteraceae und/oder einen Extrakt aus dem Material aus Kräutern der Familia Asteraceae umfaßt.

Eine weitere Lösung dieser Aufgabe ist eine Polymerzusammensetzung, die

    (A) ein biologisch abbaubares Polymer und

    (C) einen oder mehrere Inhaltsstoffe von Material aus Kräutern der Familia Asteraceae umfaßt.

Eine weitere Lösung ist ein aus der erfindungsgemäßen Polymerzusammensetzung hergestellter Formkörper sowie ein Verfahren zu dessen Herstellung.

Das biologisch abbaubare Polymer wird vorzugsweise ausgewählt aus der Gruppe, bestehend aus Cellulose, modifizierter Cellulose, Latex, eiweißpflanzlicher sowie tierischer Herkunft, insbesondere Cellulose, und Gemischen davon. Polyamide, Polyurethane und Gemische davon können ebenfalls verwendet werden, soweit diese biologisch abbaubar sind. Bevorzugt enthalten die erfindungsgemäße Polymerzusammensetzung und der daraus hergestellte Formkörper keine nicht biologisch abbaubaren Polymere oder Gemische davon.

Die erfindungsgemäßen Polymerzusammensetzungen können auch nicht biologisch abbaubare Polymere enthalten. Bestimmte Polymerlösungsmittel wie z.B. DMAc,DMSO oder DMF etc. können auch synthetische Polymere, wie aromatische Polyamide (Aramide) Polyacrylnitril (PACN) oder Polyvinylalkohole (PVA) lösen, die wiederum in Kombination mit bekannten Celluloselösungsmittel wie <u>z.B. LiCl/DMAc,</u> DMSO/PF, tertiäre Aminoxide 1 Wasser zu einer Polymerzusammensetzungen kombiniert werden können. Beispiele für modifizierte Cellulose beinhalten Carboxyethylcellulose, Methylcellulose, Nitratcellulose, Kupfercellulose, Viskosexanthogenat, Cellulosecarbamat und Celluloseacetat.

Beispiele für Fasern aus Polykondensations- und Polymersiationsprodukten sind Polyamide, die mit Methyl-, Hydroxy- oder Benzylgruppen substituiert sind. Beispiele für Polyurethane sind solche, die auf der Basis von Polyesterpolyolen aufgebaut sind.

Das Material aus Kräutern der Familia Asteracea ist vorzugsweise ein zerkleinertes Material von Blüten. Vorzugsweise sind die Kräuter der Familia Asteracea ausgewählt aus der Gruppe, bestehend aus Kamille, Echter Kamille, Strahlenlosen Kamille und der Strand-Kamille sowie der Züchtungen Degumille® und Manzana, die einen besonders hohen Gehalt an Bisabolol aufweisen.

Der Extrakt aus Material aus Kräutern der Familia Asteracea ist vorzugsweise ein ölhaltiger, wässriger oder alkoholischer Extrakt, insbesondere ein ölhaltiger Extrakt. Bevorzugt ist der Extrakt Extractum Chamomillae.

Vorzugsweise wird der ölhaltige Extrakt in den ätherischen Ölfabriken zur Erzeugung des ätherischen Kamillen-Öles gewonnen.

Da die Ausbeute an Kamillen-Öl eine sehr geringe ist (100kg Blüten geben nur 4-500g Öl), destilliert man für gewisse Zwecke die Kamille mit einer bestimmten, durch die Pharmakopöa vorgeschriebene Menge Citronenöl und erhält so ein dünnflüssigeres citronenölhaltiges Kamillen-Öl, das unter dem Namen Oleum Chamomillae citratum in den Handel kommt. Die ein oder mehreren Inhaltsstoffe des Materials aus Kräutern der Familia Asteraceae sind vorzugsweise dessen lipophile und/oder hydrophile Inhaltsstoffe. Die lipophilen Inhaltsstoffe sind vorzugsweise ausgewählt aus der Gruppe, bestehend aus Matricin, Chamazulen, Bisabololen, Bisabololoxiden, Bisaboloiden, Terpenen, En-In-Dicycloethern und Hernianin und Umbelliferon. Die hydrophilen Inhaltsstoffe sind vorzugsweise ausgewählt aus der Gruppe, bestehend aus Flavonoiden, Schleimstoffen, Phenylcarbonsäuren, Cholin und Aminosäuren.

Bisabolol kann in einer der isomeren Formen vorliegen, wie (+)-epi-α-Bisabolol, (-)-epi-α-Bisabolol, (+)-α-Bisabolol und (-)-α-Bisabolol. Die Terpene können Spathulenol, Farnesen, y-Terpin, Caren, α-Cubeben, α-Muuronlen und Calamemen, Chamaviolin und Chamomillol sein. Die En-In-Dicycloether können cis- oder trans-Spiroether sein.

Die Flavone und Flavonioide können Apigenin, Chrysosplenetin, Luteonin, Quercitin, und Patuletin. Die Schleimstoffe können Polysaccharide sein, die hauptsächlich aus a 1-4 verknüpfter D-Galakturonsäure bestehen. Weitere Bestandteile der Polysaccharide sind u.a. Glucane, Fructane, Galaktane, Mannane, Pentosane, und Polyuroniden, wie Xylose, Arabinose, Galaktose,Glukose und Rhamnose.

Die erfindungsgemäße Polymerzusammensetzung enthält vorzugsweise das Material aus Kräutern der Familia Asteraceae und/oder den Extrakt aus dem i Material aus Kräutern der Familia Asteraceae und/oder ein oder mehrere Inhaltsstoff der Kräuter der Familia Asteracea in einer Menge von 0,1 bis 30 Gew.%, bezogen auf das Gewicht des biologisch abbaubaren Polymers.

Die erfindungsgemäßen Formkörper können mit herkömmlichen Verfahren aus der erfindungsgemäßen Polymerzusammensetzung hergestellt werden, wobei das biologisch abbaubare Polymer und das Material aus Kräutern der Familia Asteraceae und/oder ein Extrakt aus dem Material aus Kräutern der Familia Asteraceae und/oder ein oder mehrere Inhaltsstoff der Kräuter der Familia Asteracea (nachstehend auch " Material aus Kräutern der Familia Asteraceae, dessen Extrakt und/oder dessen Inhaltsstoffe" genannt) zur Herstellung der Polymerzusammensetzung zunächst gemischt und sodann der Formkörper hergestellt wird.

Das kontinuierliche oder diskontinuierliches Mischen des biologisch abbaubaren Polymers und des Materials aus Kräutern der Familia Asteraceae, dessen Extrakt und/oder dessen Inhaltsstoffe kann mit Apparaten und Verfahren erfolgen, wie in WO 96/33221, US 5,626,810 und WO 96/33934 beschrieben.

Der aus der erfindungsgemäßen Polymerzusammensetzung hergestellte Formkörper ist vorzugsweise ausgewählt aus der Gruppe, bestehend aus Behältern, Folien, Membranen, Geweben und Fasern. Die Fasern sind vorzugsweise Stapelfasern, Mono- oder Endlosfilamente.

Der erfindungsgemäße Formkörper hat vorzugsweise eine Kristallinität von < 40% gemessen nach der Dichtemethode oder der WAXS Methode, wie nachstehend dargelegt. Vorzugsweise hat der Formkörper eine Kristallinität von <_ 35%, gemessen nach der Dichtemethode und/oder eine Kristallinität von<_ 36%, gemessen nach der WAXS Methode.

Der erfindungsgemäße Formkörper ist vorzugsweise in einem Gewebe, Vliesstoff oder Kleidungsstück anwesend.

Insbesondere bevorzugt liegt der erfindungsgemäße Formkörper in Form von Fasern, am bevorzugtesten in Form von Cellulosefasern vor. Verfahren zur Herstellung der erfindungsgemäßen Cellulosefasern sind bekannt, wie das Lyocell oder NMMO -, Rayon- oder Viskose- oder das Carbamat-Verfahren.

Das Lyocell-Verfahren kann wie nachstehend beschrieben durchgeführt werden. Zur Herstellung einer verformbaren Masse sowie der erfindungsgemäßen Cellulosefasern wird eine Lösung aus Cellulose, NMMNO und Wasser dadurch hergestellt, daß zunächst eine Suspension aus Cellulose, NMMNO und Wasser gebildet wird und diese Suspension unter reduziertem Druck in einer 1 bis 20 mm dicken Schicht kontinuierlich über eine Wärmeaustauschfläche durch rotierende Elemente transportiert wird. Während dieses Vorgangs wird solange Wasser verdampft, bis eine homogene Celluloselösung entstanden ist. Die so erhaltenen Celluloselösungen können eine Menge an Cellulose von 2 bis 30 Gew.%, an NMMNO von 68 bis 82 Gew.% und an Wasser von 2 bis 17 Gew.% enthalten. Falls es erwünscht ist, können dieser Lösung Additive, wie anorganische Salze, anorganische Oxide, feinverteilte organische Substanzen oder Stabilisatoren, zugesetzt werden.

Der so erhaltenen Celluloselösung wird sodann das Material aus Kräutern der Familia Asteraceae, deren Extrakt und/oder deren Inhaltsstoffe in Form von Pulver; Pulversuspension oder in flüssiger Form, als Extrakt oder Suspension, kontinuierlich oder diskontinuierlich zugegeben.

Verfahrensbedingt kann das Material aus Kräutern der Familia Asteraceae, deren Extrakt und/oder deren Inhaltsstoffe auch nach oder während der kontinuierlichen Zerkleinerung der trockenen Cellulose, beispielsweise in Form von Blütenmaterial ursprünglicher Größe, als Pulver oder hochkonzentrierte Pulversuspension zugegeben werden. Die Pulversuspension kann in Wasser oder jedem beliebigen Lösungsmittel in der gewünschten und für das Verfahren benötigten Konzentration hergestellt werden.

Des weiteren besteht auch die Möglichkeit das Material aus Kräutern der Familia Asteraceae, deren Extrakt und/oder deren Inhaltsstoffe einem Pulpprozeß mit gleichzeitiger Zerkleinerung zuzuführen . Das Pulpen kann entweder in Wasser, in Laugen oder aber in dem späteren zur Auflösung der Cellulose notwendigen Lösungsmittel durchgeführt werden. Auch hier kann das Material aus Kräutern der Familia Asteraceae, deren Extrakt und/oder deren Inhaltsstoffe in fester, pulverförmiger, suspensionsförmiger Art oder aber auch in flüssiger Form zugegeben werden.

Die mit dem Material aus Kräutern der Familia Asteraceae, deren Extrakt und/oder deren Inhaltsstoffen angereicherte Polymerzusammensetzung kann unter Anwesenheit eines Derivatisierungsmittels und/oder eines für den Löseprozeß bekannten Lösemittels in eine verformbare Extrusionsmasse übergeführt werden.

Eine weitere Möglichkeit der Zugabe des Materials aus Kräutern der Familia Asteraceae, deren Extrakt und/oder deren Inhaltsstoffen ist die Zugabe während eines kontinuierlich geführten Lösevorganges, wie in EP 356419 und US-PSen 5,049,690 und 5,330,567 beschrieben.

Alternativ kann die Zugabe diskontinuierlich unter Erhalt eines Master-Batch der Celluloselösung, durchgeführt werden. Vorzugsweise wird das Material aus Kräutern der Familia Asteraceae, deren Extrakt und/oder deren Inhaltsstoffe kontinuierlich zugegeben.

Das Material aus Kräutern der Familia Asteraceae, deren Extrakt und/oder deren Inhaltsstoffe kann in jeder anderen Stufe des Herstellungsverfahrens des Formkörpers zugesetzt werden. Beispielsweise kann es in ein Rohrleitungssystem mit entsprechender Vermischung durch darin angebrachte Statikmischerelemente bzw. Rührorganen, wie bekannte Inline Refiner oder Homogenisatoren, z. B. Geräte der Ultra Turrax, eingespeist werden. Wird das Verfahren im kontinuierlichen batch Betrieb, z.B. über eine Rührkesselkaskade, durchgeführt, so kann an der für das Verfahren optimalsten Stelle das Material aus Kräutern der Familia Asteraceae, deren Extrakt und/oder deren Inhaltsstoffe in fester, pulverförmiger, suspensionsförmiger oder flüssiger Form eingebracht werden. Die Feinverteilung kann mit bekannten auf das Verfahren abgestimmten Rührelementen erreicht werden.

Je nach eingesetzter Partikelgröße kann die gebildete inkorporierte Extrusions- oder Spinnmasse vor oder nach der Inkorporation filtriert werden. Bedingt durch die Feinheit des eingesetzten Produktes kann bei Spinnverfahren mit großen Düsendurchmessern auch auf eine Filtration verzichtet werden.

Handelt es sich um sehr sensitive Spinnmassen, kann über eine Injektionsstelle das Material aus Kräutern der Familia Asteraceae, deren Extrakt und/oder deren Inhaltsstoffe in geeigneter Form direkt vor der Spinndüse oder dem Extrusionswerkzeug zugeführt werden.

Eine weitere Möglichkeit ist es, falls Material aus Kräutern der Familia Asteraceae, deren Extrakt und/oder deren Inhaltsstoffe in flüssiger Form vorliegt, dieses während des Spinnvorganges dem kontinuierlich gesponnenen Faden zuzuführen.

Die so erhaltene Celluloselösung wird nach herkömmlichen Verfahren, wie dem dry -jet- wet- ; dem wet-spinning-; dem melt blown- Verfahren , dem Zentrifugenspinnen; dem Trichterspinnen oder dem Trockenspinnverfahren versponnen Die Patentschriften US 5,589,125 und 5,939,000; sowie EP 0574870 B1 und WO 98/07911 beschreiben Spinnverfahren zur Herstellung von Cellulosefasern nach dem NMMO-Verfahren. Gegebenenfalls werden die gebildeten Formkörper den herkömmlichen Chemiefasernachbehandlungsverfahren für Filamente oder Stapelfasern unterworfen.

Es wird eine erfindungsgemäße Cellulosefaser mit einem Material aus Kräutern der Familia Asteraceae, deren Extrakt und/oder deren Inhaltsstoffe erhalten.

Neben den Spinnverfahren bieten sich auch noch Extrusionsverfahren zur Herstellung von Flachfolien, Rundfolien , Häuten (Wursthäuten) sowie Membranen an.

Das Viskose-Verfahren kann folgendermaßen durchgeführt werden. Dabei wird Zellstoff mit ca. 90 bis 92 Gew.-% a-Cellulose mit wässriger NaOH behandelt. Danach wird die Cellulose durch Umsetzen mit Schwefelkohlenstoff in Cellulosexanthogenat umgewandelt und eine Viskoselösung durch Zusatz von wässriger NaOH unter ständigem Rühren erhalten. Diese Viskoselösung enthält ca. 6 Gew.-% Cellulose, 6 Gew.-% NaOH und 32 Gew.-% Schwefelkohlenstoff, bezogen auf den Cellulosegehalt. Nachdem die Suspension gerührt wurde, wird das Material aus Kräutern der Familia Asteraceae, deren Extrakt und/oder deren Inhaltsstoffe, entweder als Pulver oder flüssigen Extrakt, zugesetzt. Falls es erwünscht ist, können übliche Additive, wie Tenside, Dispergiermittel oder Stabilisatoren, zugegeben werden.

Das Material aus Kräutern der Familia Asteraceae, deren Extrakt und/oder deren Inhaltsstoffe kann wiederum alternativ in jeder Stufe des Verfahrens zugegeben werden.

Sodann wird die so erhaltene Lösung zu Fasern gesponnen, wie beispielsweise in der US-PS-4,144,097 beschrieben.

Das Carbamat-Verfahren kann wie nachstehend beschrieben durchgeführt werden. Dazu wird aus Zellstoff mit ca. 92 bis 95 Gew.-% a-Cellulose Cellulose-Carbamat hergestellt, wie beispielsweise in der US-PS-5,906,926 oder der DE-PS-196 35 707 beschrieben. Dabei wird Alkalicellulose aus dem eingesetzten Zellstoff durch Behandeln mit wässriger NaOH hergestellt. Nach dem Zerfasern wird die Alkalicellulose einer Reife unterworfen, und sodann wird die Natronlauge ausgewaschen. Die so aktivierte Cellulose wird mit Harnstoff und Wasser vermischt und in einen Reaktor in ein Lösungsmittel eingebracht. Das so erhaltene Gemisch wird erwärmt. Das entstandene Carbamat wird abgetrennt und daraus eine Carbamatspinnlösung hergestellt, wie in der DE-PS-197 57 958 beschrieben. Dieser Spinnlösung wird Material aus Kräutern der Familia Asteraceae, deren Extrakt und/oder deren Inhaltsstoffe zugesetzt.

Die so erhaltene Spinnlösung wird nach bekannten Verfahren zu Fasern gesponnen, und es werden erfindungsgemäße Cellulosefasern erhalten. Es hat sich überraschend herausgestellt, daß die erfindungsgemäßen Cellulosefasern trotz des Zusatzes eines Additivs dieselben hervorragenden Eigenschaften zeigen, wie Cellulosefasern ohne Additiv, bezüglich ihrer Feinheit, Reißkraft, Reißkraftvariation, Dehnung, Naßdehnung, feinheitsbezogenen Reißkraft, feinheitsbezogenen Naßreißkraft, feinheitsbezogenen Schlingenreißkraft, Naßscheuerung bei Bruch, Naßscheuerungsvariation und Naßmodul und gleichzeitig die durch das Material aus Kräutern der Familia Asteraceae, deren Extrakt undloder deren Inhaltsstoffe verliehenen positiven Eigenschaften zeigen.

Dies ist insbesondere überraschend, da der Zusatz von Additiven zu Spinnmassen aus Cellulose, NMMNO und Wasser den Nachteil hat, daß sich diese bei der Verwendungstemperatur verfärben, nicht lagerstabil sind und Verunreinigungen in die cellulosischen Endprodukte einbringen.

Insbesondere haben die erfindungsgemäßen Formkörper, besonders in Form von Fasern, die zu einem Kleidungsstück verarbeitet wurden, den Vorteil, dass die Wirkstoffe des Material aus Kräutern der Familia Asteraceae, deren Extrakt und/oder deren Inhaltsstoffen beim Tragen des Kleidungsstücks langsam an die Haut des Menschen abgegeben werden und dort über einen längeren Zeitraum Ihre positive Wirkungen, wie entzündungshemmend, krampflösend, wundheilungsfördernd, keimhemmend und leicht desodorierend, entfalten können.

Nachstehend wird die Erfindung anhand von einem Beispielen erläutert.

Beispiel 1 - Herstellung modifizierter Lyocellfaser

3748 g NMMNO (61 %ig), 385 g MoDo, DP 500, Trocken-Gehalt 94 %, 2,3 g Propylgallat (etwa 0,63 % bezogen auf den Cellulosegehalt) sowie 30 g Kamille (Chamomilla recutita - Fa. Kotanyi - fein zerkleinert) wurden gemischt und das so erhaltene Gemisch auf 94 °C erwärmt. Es wurde eine diskontinuierlich hergestellte Spinnlösung mit einem Cellulosegehalt von 12 % und einer Viskosität von 9.018 Pa.s erhalten. Die so erhaltene Spinnlösung wurde zu Fasern versponnen, bei folgenden Spinnbedingungen eingehalten wurden:

| | |
|---|---|
| Temperatur des Vorratsbehälters | 90°C |
| Temperaturspinnblock, Düse | 80°C |
| Spinnbad | 4°C |
| Spin n pumpe | 0,6 cm$^3$/U |
| Düsenfilter | 2x800/5x19200 M/cm$^2$ |
| Spinn-Düse | 500 Loch 90 pm; Au/Pt |
| Endabzug | 30m/min |

Die Drehzahl der Spinnpumpe wurde variiert, so dass Fasern mit 3 unterschiedlichen Feinheiten erhalten wurden - siehe Tabelle 1.

Die Fasern wurden auf 40 mm Stapellänge geschnitten lösungsmittelfrei , gewaschen und mit einer 10 g/l Avivage (50 % Leomin OR-50 % Leomin WG (stickstoffhaltiger Fettsäurepolyglykolester Fa. Clariant GmbH) bei 45°C ausgerüstet bzw. die Fettauflage zur besseren Faserweiterverarbeitung aufgebracht und bei 105 °C getrocknet. Im Anschluß an das Trocknen wurde eine Faserfeuchtigkeit von 11 % eingestellt. Ein zusätzlicher Bleichvorgang vor dem Trocknen wurde nicht durchgeführt.

Das Spinnverhalten der gemäß diesem Beispiel erhaltenen Spinnlösung war gut.

| | | Faser 1 | **Faser 2** | Faser 3 |
|---|---|---|---|---|
| Feinheit-Titer | [dtex] | 2,27 | **1,86** | 1,70 |
| Fb - Reißkraft trocken | [cN/tex] | 41,8 | **42,5** | 42,2 |
| Fb - Reißkraft naß | [cN/tex] | 34,0 | **34,8** | 30,8 |
| Fb - Reißkraft Schlinge | [cN/tex] | 11,6 | **11,6** | 8,1 |
| Höchstzugkraftdehnung - trocken | [%] | 11,0 | **11,1** | 10,6 |
| Höchstzugkraftdehnung - naß | [%] | 13,5 | **13,8** | 12,5 |
| Naßmodul | [cN/tex] | 210 | **215** | 213 |

## RESULTAT 1

### Bestimmung Bisabolol-Gehalt

Von dem Ausgangsmaterial der Kamille, von der fein zerkleinerten Kamille (Pulver) sowie von der Faser 2 aus Beispiel 1 wurde der Bisabolol - Gehalt bestimmt.

Dazu wurde die Bestimmung nach dem Deutschen Arzneibuch (DAB 2000 - Amtliche Ausgabe, Deutscher Apotheker Verlag, ISBN 3-7692-2720-4) mit Wasserdampfdestillation und Gaschromatographie mit Flammenionisationsdetektor (Fabrikat: Carlo Erba, Typ "Vega") durchgeführt. Neben der direkten Bestimmung wurden auch die wäßrige Extrakte auf Bisabolol untersucht.

Der Extrakt aus der Kamillen -Droge wurden hergestellt, indem 1 g Kamille in 500 ml voll entsalztem Wasser 24 h lang bei Raumtemperatur stehen gelassen wurde. Für den Extrakuder feinzerkleinerten Kamille wurde 1 g feinzerkleinerte Kamille nach der oben beschriebenen Extraktion behandelt, für den Extrakt der Faser wurden 12,5 g Fasermaterial auf gleiche Weise extrahiert.

Bei diesen Extrakten wurde somit jeweils ca. 1 g Kamille, als Pflanze, als Pulver, bzw. in die Faser inkorporiert mit 500 ml Wasser extrahiert.

In Tabelle 2 sind die Ergebnisse aus den Bestimmungen angeführt, jeweils auf mg pro g Kamille (als Pflanze, als zerkleinerte Pflanze/Pulver bzw. in die Faser inkorporiert).

Überraschend ist, daß in der Faser mit der angewendeten Standard-Methode kein Bisabolol nachgewiesen werden konnte, wohl aber im wäßrigen Extrakt der Faser. Das läßt darauf schließen, daß das Bisabolol aus der Cellulosematrix erst durch einen längeren Extraktionsprozeß herausgelöst werden kann. Ein solcher Extraktionsprozeß ist zum Beispiel beim Tragen eines Kleidungsstückes oder Gewebes aus einer solchen Faser auf schweißfeuchter Haut gegeben.

Im wäßrigen Extrakt der Pflanze kann kein Bisabolol/Bisabololoxid nachgewiesen werden, überraschenderweise kann allerdings in dem feinzerkleinerten Pulver das Bisabolol gefunden werden. Dies kann nur durch die Zerkleinerung erklärt werden, bei der die Zellwände aufgebrochen werden, und so das Bisabolol besser zugänglich wird. Daß auch das Bisabololoxid im Extrakt der Faser gefunden wird, kann auf die große Oberfläche der Fasern und die Verteilung der zerkleinerten Pflanze in der Faser zurückgeführt werden. Natürlich wird durch den Faserherstellungsprozeß nicht das gesamte Bisabolol bzw. Bisabololoxid des Pulvers in die Faser eingebaut, was die geringeren Werte der Faser in der Tabelle zeigt.

Tabelle 2:

| Bisabolol Gehalt | | | | |
|---|---|---|---|---|
| | | **Pflanze** | **Faser 2** | **Zerkleinerte Pflanze (Pulver)** |
| Bisabololoxid A | [mg/g Kamille] | 1,24 | n.n. | 0,21 |
| Bisabololoxid B | [mg/g Kamille] | 0,82 | n.n. | 0,07 |
| Bisabolol | [mg/g Kamille] | 0,10 | n.n. | n.n. |
| | | **wässriger Extrakt** | | |
| | | **Pflanze** | **Faser 2** | **Zerkleinerte Pflanze (Pulver)** |
| Bisabololoxid A | [mg/g Kamille] | n.n. | 0,17 | 0,81 |
| Bisabololoxid B | [mg/g Kamille] | n.n. | 0,08 | 0,64 |
| Bisabolol | [mg/g Kamille] | n.n. | n.n. | 0,09 |
| n.n.= nicht nachweisbar | | | | |

**RESULTAT 2**

Kristallinitätsbestimmung

Die Morphologie herkömmlicher Lyocell Fasern ist relativ einheitlich mit einer dichten Netzwerkstruktur über den gesamten Querschnitt. Die Kristallinität ist im Vergleich zu normalen Viskösefasern sehr hoch, die Orientierung der amorphen Bereiche ist ebenfalls sehr hoch. Dies wirkt sich durch eine erhöhte Fibrillierungsneigung der Lyocellfaser im Vergleich zur Viskose aus. (H.-P. Fink, P. Weigel, E. Walenta: "Structural Aspects of Lyocell-Type Cellulosic Man Made Fibres", Proceedings of International Conference an Advanced Fiber Materials, Oktober 1999, Ueda, Japan;)

Es wurde daher die in Beispiel 1 hergestellte modifiziert Lyocellfaser auf Kristallinität untersucht.

Über eine Dichtegradientensäule mit den Lösungsmitteln Tetrachlorkohlenstoff und n-Heptan wurde die Dichte der modifizierten Lyocell-Faser sowie von normalen Lyocell -, Viskose- und Modal Viskosefasern bestimmt. Dazu wird nach Eichung und Überprüfung der Dichtegradientensäule die Faser aufgegeben und ca. 24 h lang das Schwebegleichgewicht abgewartet. Nun wird über die Höhe die Dichte abgelesen.

Aus der gemessenen Dichte wird der Kristallinitätsindex (in Prozent) mit folgender Formel berechnet:

$$\text{Kristallinitätsindex } XC = \frac{(p\ gemessen - p\ amorph)}{(p\ kristallin - p\ amorph)}$$

mit

$p\ amorph$ = 1,4706
$p\ kristallin$ = 1,5923

("Cellulose and its derivates", Ellis Horwood, Chichester, 1985, Chapter 6)

Literatur:

H.A. Krässig, "Cellulose Structure, Accessibility and Reactivity", Gordon and Breach
Science Publishers Polymer Monographs Volume 11, 2. Auflage, bzw. R.W. Moncrieff, "Man-Made Fibres", Wiley
Verlag, New York, 5. Auflage, 1970

Neben der Faser 2 aus Beispiel 1 wurde zum Vergleich auch die Dichte und damit der Kristallinitätsindex von einer Standard - Lyocellfaser, einer Viskosefaser und einer Modalfaser bestimmt.

Überraschend ist, das der Kristallinitätsindex der modifizierten Lyocellfaser auf dem Niveau der Viskosefaser ist.

| Faser | Dichte | Kristallinitätsindex |
|---|---|---|
|  | [g/cm$^3$] | [%] |
| Beispiel 1 - modifizierte Lyocellfaser | 1,5129 | 35 |
| Standard Lyocellstapelfaser | 1,5201 | 41 |
| Viskosestapelfaser | 1,5126 | 35 |
| Viskose Modalstapelfaser | 1,5081 | 31 |

Die Ergebnisse für Lyocell- und Viskosefasern liegen in Bereichen, die aus der Literatur bekannt sind. (H.-P. Fink, P. Weigel, E. Walenta: "Structural Aspects of Lyocell-Type Cellulosic Man-Made Fibres", Proceedings of International Conference an Advanced Fiber Materials, Oktober 1999, Ueda, Japan).

Überraschend ist, dass der Kristallinitätsindex der modifizierten Lyocellfaser auf dem Niveau der Viskosefaser ist, die textil-physikalischen Eigenschaften jedoch im Bereich der Lyocellfasern liegen.

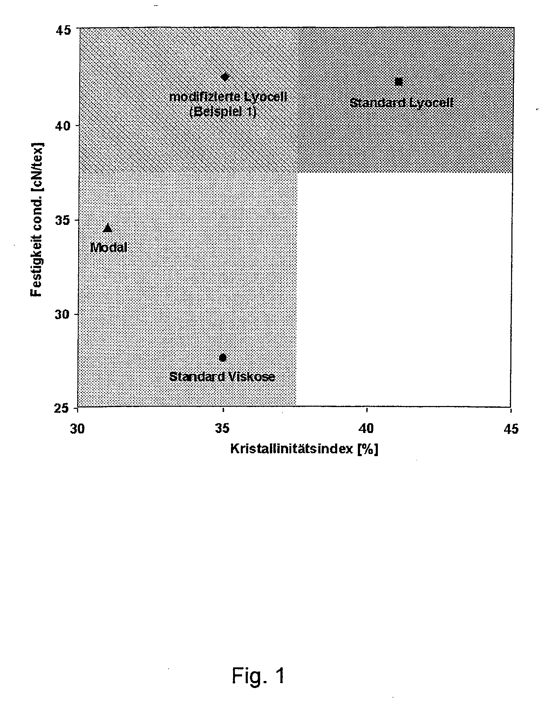

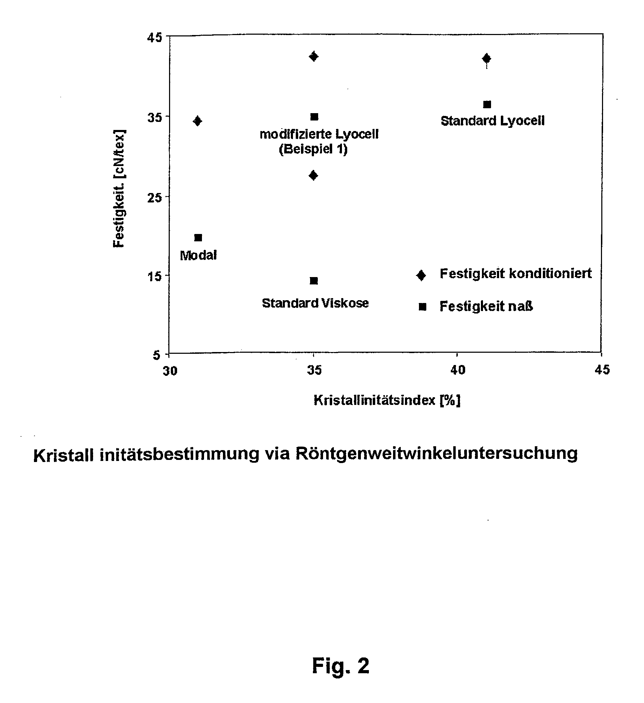

In den Figuren 1 und 2 ist dieses Verhalten anhand des Beispiels feinheitsbezogener Faserfestigkeit (jeweils konditioniert und naß) zu Kristallinitätsindex veranschaulicht.

Neben der Dichtemessung wurden auch die Fasern mittels Röntgenweitwinkeluntersuchung (WAXS) untersucht. Es wurde der Kristallinitätsgrad $X_c$ bestimmt.

| Faser | Kristallinitätsgrad $X_c$ [%] |
|---|---|
| Beispiel 1 - modifizierte Lyocellfaser 2 | 36 |
| Standard Lyocellstapelfaser | 47 |
| Viskosestapelfaser | 35 |
| Viskose Modaistapelfaser | 36 |

Durch das Inkorporieren von zerkleinerten Kamillenmaterial werden die Schleimstoffe in die Suspension bzw. in die Lösung eingebracht. Diese quellen im Wasser und somit auch in der NMMO-Wasser-Celluloselösung auf. Dadurch wird die Struktur während der Cellulose -Lösungsherstellung und dem Verspinnen dahingehend beeinflussen, daß diese Stoffe die Cellulose - Kristallstruktur "stören" und so mehr amorphe Bereiche in der Faser entstehen.

**Patentansprüche**

1. Polymerzusammensetzung, umfassend

    (A) ein biologisch abbaubares Polymer und

    (B) ein Material aus Kräutern der Familia Asteraceae und/oder einen Extrakt aus dem Material aus Kräutern der Familia Asteraceae.

2. Polymerzusammensetzung, umfassend

    (A) ein biologisch abbaubares Polymer und

(C) einen oder mehrere Inhaltsstoffe von Material aus Kräutern der Familia Asteraceae

3. Polymerzusammensetzung nach Anspruch 1 oder 2, wobei das biologisch abbaubare Polymer ausgewählt ist aus der Gruppe, bestehend aus Cellulose, modifizierter Cellulose, Latex, Eiweiß pflanzlicher sowie tierischer Herkunft, und Gemischen davon.

4. Polymerzusammensetzung nach einem der vorstehenden Ansprüche, wobei die Familia Asteracea die Subfamilia Asteroideae ist.

5. Polymerzusammensetzung nach einem der vorstehenden Ansprüche, wobei das Material von Kräutern der Familia Asteracea in einer Menge von 0,1 bis 30 Gew.-%, bezogen auf das Gewicht des biologisch abbaubaren Polymers, vorliegt.

6. Formkörper, umfassend eine Polymerzusammensetzung nach einem der vorstehenden Ansprüche.

7. Formkörper nach Anspruch 6, wobei der Formkörper ausgewählt ist aus der Gruppe, bestehend aus Behältern, Folien, Membranen, Geweben und Fasern.

8. Formkörper nach Anspruch 7, wobei der Formkörper in Form von Fasern vorliegt und die Fasern Stapelfasern, Morio- oder Endlosfilamente sind.

9. Formkörper nach einem der Ansprüche 6 bis 8, wobei der Kristallinitätsgrad <40 % ist.

10. Verwendung des Formkörpers nach einem der Ansprüche 6 bis 9 als Verpackungsmaterial oder Fasermaterial.

11. Verwendung des Formkörpers nach einem der Ansprüche 6 bis 9 in Form von Fasermaterial als Mischungskomponente zur Herstellung von Garnen.

12. Verwendung des Formkörpers nach einem der Ansprüche 6 bis 9 in Form von Fasermaterial zur Herstellung von Vliesstoffen oder Geweben (non-wovens).

13. Verwendung des Formkörpers nach einem der Ansprüche 6 bis 9 in Form von Fasermaterial zur Herstellung von Vliesstoffen oder Geweben, wobei in dem Vliesstoff oder Gewebe zusätzlich eine Komponente ausgewählt aus der Gruppe, bestehend aus Baumwolle, Lyocell, Rayon, Carbacell, Polyester, Polyamid, Celluloseacetat, Acrylat, Polypropylen oder Gemischen davon anwesend ist.

14. Verwendung des Formkörpers nach Anspruch 13, wobei 0 bis 30 Gew.-% der zusätzlichen Komponente enthalten sind.

15. Gewebe, umfassend einen Formkörper nach einem der Ansprüche 6 bis 9.

16. Vliesstoff, umfassend einen Formkörper nach einem der Ansprüche 6 bis 9.

17. Kleidungsstück, umfassend einen Formkörper nach einem der Ansprüche 6 oder 9.

18. Verfahren zur Herstellung eines Formkörpers nach einem der Ansprüche 6 bis 9, umfassend die folgenden Schritte:

(A) kontinuierliches oder diskontinuierliches Mischen des biologisch abbaubaren Polymers und das Material aus Kräutern der Familia Asteraceae und/oder ein Extrakt aus dem Material aus Kräutern der Familia Asteraceae und/oder ein oder mehrere Inhaltsstoff der Kräuter der Familia Asteracea,
(B) Herstellen einer verformbaren Masse,
(C) Verarbeiten der in (B) erhaltenen Masse zu einem Formkörper, und, gegebenenfalls
(D) Nachbehandeln des hergestellten Formkörpers.

19. Verfahren nach Anspruch 18, wobei ein Formkörper nach einem der Ansprüche 6 bis 9 hergestellt wird.

20. Verfahren nach Anspruch 18, wobei im Schritt (A) N-MethylmorpholinN-Oxid zugegeben wird und das biologisch abbaubare Polymer Cellulose ist.

Fig. 1

Kristall initätsbestimmung via Röntgenweitwinkeluntersuchung

Fig. 2

**Europäisches Patentamt**

# EUROPÄISCHER RECHERCHENBERICHT

Nummer der Anmeldung

EP 03 45 0085

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | WO 97 17944 A (AL CHI MI A S R L ;CALDERINI GABRIELLA (IT); SCESA CARLA (IT)) 22. Mai 1997 (1997-05-22) * Seite 8, Zeile 7 - Zeile 15; Beispiel 8 * * Ansprüche * --- | 1,4,6,7, 18,19 | C08K5/00 C08K11/00 C08L101/00 C08L1/02 C08L1/08 C08L7/02 C08L89/00 |
| A | US 2001/028126 A1 (EDGETT KEITH ET AL) 11. Oktober 2001 (2001-10-11) * Zusammenfassung; Abbildung 1 * * Seite 2, Absatz 22 * --- | 1-20 | D01F8/02 D01F1/02 D01F1/10 |
| A | DATABASE WPI Section Ch, Week 200012 Derwent Publications Ltd., London, GB; Class A17, AN 2000-128918 XP002251135 & JP 11 209514 A (KAWAGOE Y), 3. August 1999 (1999-08-03) * Zusammenfassung * --- | 1-20 | |
| A | DATABASE WPI Section Ch, Week 199402 Derwent Publications Ltd., London, GB; Class A11, AN 1994-012883 XP002251136 & JP 05 321017 A (ASAHI CHEM IND CO LTD), 7. Dezember 1993 (1993-12-07) * Zusammenfassung * --- | 1-20 | RECHERCHIERTE SACHGEBIETE (Int.Cl.7) D01F C08L |
| A | WO 02 12381 A (ZIMMER AKTIENGESELLSCHAFT) 14. Februar 2002 (2002-02-14) * Ansprüche * --- | 1-20 | |
| A | WO 01 62844 A (ZIMMER AG) 30. August 2001 (2001-08-30) * Ansprüche 1-20 * ----- | 1-20 | |

Der vorliegende Recherchenbericht wurde für alle Patentansprüche erstellt

| Recherchenort | Abschlußdatum der Recherche | Prüfer |
|---|---|---|
| DEN HAAG | 15. August 2003 | Mazet, J-F |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie,übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 03 45 0085

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-08-2003

| Im Recherchenbericht angeführtes Patentdokument | | Datum der Veröffentlichung | Mitglied(er) der Patentfamilie | | Datum der Veröffentlichung |
|---|---|---|---|---|---|
| WO 9717944 | A | 22-05-1997 | IT | VR950092 A1 | 16-05-1997 |
| | | | WO | 9717944 A1 | 22-05-1997 |
| US 2001028126 | A1 | 11-10-2001 | US | 6248274 B1 | 19-06-2001 |
| | | | AU | 4018401 A | 24-04-2001 |
| | | | CA | 2385255 A1 | 29-03-2001 |
| | | | EP | 1261762 A1 | 04-12-2002 |
| | | | JP | 2003510110 T | 18-03-2003 |
| | | | WO | 0121866 A1 | 29-03-2001 |
| JP 11209514 | A | 03-08-1999 | KEINE | | |
| JP 5321017 | A | 07-12-1993 | KEINE | | |
| WO 0212381 | A | 14-02-2002 | DE | 10037983 A1 | 26-04-2001 |
| | | | AU | 8195601 A | 18-02-2002 |
| | | | WO | 0212381 A1 | 14-02-2002 |
| WO 0162844 | A | 30-08-2001 | DE | 10007794 A1 | 28-06-2001 |
| | | | AU | 4242601 A | 03-09-2001 |
| | | | AU | 7207901 A | 03-09-2001 |
| | | | BR | 0108585 A | 29-04-2003 |
| | | | CA | 2399954 A1 | 30-08-2001 |
| | | | CN | 1404504 T | 19-03-2003 |
| | | | WO | 0162844 A1 | 30-08-2001 |
| | | | WO | 0162845 A1 | 30-08-2001 |
| | | | EP | 1257598 A1 | 20-11-2002 |
| | | | EP | 1259564 A1 | 27-11-2002 |
| | | | NO | 20023945 A | 21-10-2002 |

EPO FORM P0461

Für nähere Einzelheiten zu diesem Anhang : siehe Amtsblatt des Europäischen Patentamts, Nr. 12/82